# EUROPEAN PATENT SPECIFICATION

(11) **EP 2 417 071 B1**
(45) Date of publication and mention of the grant of the patent: **14.08.2013**
(21) Application number: 10717741.2
(22) Date of filing: 08.04.2010
(51) Int. Cl.: C02F 9/02, C02F 9/06, C02F 9/10, C10M 175/04

(54) **COLLOID DECOMPOSITION METHOD AND APPARATUS FOR ELECTROCHEMICALLY SEPARATING EMULSIONS**
KOLLOIDZERSETZUNGSVERFAHREN UND VORRICHTUNG ZUM ELEKTROCHEMISCHEN TRENNEN VON EMULSIONEN
PROCÉDÉ DE DÉCOMPOSITION DE COLLOÏDES ET APPAREIL POUR LA SÉPARATION ÉLECTROCHIMIQUE D'ÉMULSIONS

(30) Priority: 09.04.2009 HU 0900222
(43) Date of publication of application: 15.02.2012
(73) Proprietor: G.i.c. Ipari Szolgáltató És Kereskedeklmi Kft., 1118 Budapest (HU)
(72) Inventor: SCHREMMER, István, H-1118 Budapest (HU); KOVÁCS, Bernadett, Ivett, H-7144 Decs (HU); KIS-BENEDEK, József, H-7144 Decs (HU); ÉBERT, László, H-2040 Budaörs (HU)
(74) Representative: Jakabné Molnar, Judit
(86) International application number: PCT/HU2010/000040
(87) International publication number: WO 2010/116199

(56) References cited:
- DE-A1- 3 337 656
- DE-A1- 3 528 198
- DE-A1- 4 102 175
- DE-A1- 4 230 765
- DE-U1- 9 309 729

## Description

The invention relates to a colloid decomposition method and apparatus for electrochemically resolving emulsions containing oil and water and removing colloid particles floating in water. The method and the apparatus are capable of electrochemically resolving emulsions of the so-called "oil in water" (O/W) type that have low oil content and/or contain a low-stability emulsifier, but are also applicable for electrochemically resolving emulsions of the so-called "water in oil" (W/O) type that have higher oil content and/or contain high-stability emulsifier.

Treatment or decontamination of contaminated water is becoming more and more important nowadays with increasing industrial and domestic water use and the shrinking of natural drinking water reserves. Presently applied decontamination methods can be grouped into three categories: physical, chemical, and biological water treatment methods. Physical methods aim primarily at removing solid contaminants, using various filtering and settlement technologies. Filtering technologies include the application of screens or filters made from structural materials resistant to the medium being filtered, or utilizing natural filter layers, such as gravel beds or sand layers. Settlement technologies exploit the difference in specific weight between water and solid particles for separating the contaminants.

Chemical methods are applied for removing primarily organic floating contaminants that are difficult to filter out, while biological treatment is usually applied for producing drinking water.

Commonly applied water treatment processes usually involve a combination of these three method types. The first step of water treatment is usually an initial filtering phase, where solid contaminants larger than 1 mm are removed. Contaminated waters as well as natural surface waters always contain floating, colloid-sized solid materials to a greater or lesser extent. These colloid materials have to be removed before the water is used. Although colloid particles have higher density than water, they remain floating in water instead of settling. They are highly stable and resistant to flock formation. Since colloid particles have negative electric charge and repel each other, their spontaneous aggregation and flock formation requires a long time.

For successfully removing colloid particles from water the stabilizing forces should be eliminated in order to form bigger-sized particles or flocks that can be separated from water by mechanical means. According to methods applied in present-day practice, the formation of bigger-sized particles involves coagulation and flocculation: de-stabilizing colloid particles and accumulating the de-stabilized particles into larger flocks.

The prior art includes a number of methods for electrochemically resolving colloid-containing solutions, more particularly emulsions of the O/W type. Such emulsions, e.g. the wastewater discharged from car washes, are electrically conductive, usually have an oil concentration of less than 1.5%, and are not overly stable. Electrochemical emulsion breaking methods usually involve the application of various flocculants, such as iron compounds or aluminium compounds. Due to their better flocculation characteristics aluminium compounds, which hydrolyse to poly-aluminium hydroxides while the pH of the emulsion is set near neutral, have seen more widespread use. Colloid particles become bound on the surface of flocculating poly-aluminium hydroxide particles and thereby they can be removed by settling or filtering. The efficiency of the method is highly dependent upon the pH of the solution and the reagent feeding parameters.

Hungarian patent HU 171,746 discloses an electro-flocculation apparatus for resolving O/W type emulsions. The apparatus has a vertically arranged parallel electrode system, foam separating and removing means, and a settlement space connected to the reaction space. A flotation gas is produced utilising the electrodes, and the tiny bubbles of the gas resolve the emulsion.

Hungarian patent HU 190,201 discloses an emulsion breaking apparatus. Emulsion breaking is performed by electrochemical means between electrode plates, following the neutralization of the emulsion. The greatest disadvantage of these methods is their high energy demand due to the inability of adjusting their energy consumption to the optimum. Another disadvantage lies in that the decontamination degree achievable by these methods does not conform to strict environmental regulations, and the degree of decontamination is not controllable.

An apparatus and method for resolving emulsions is disclosed in Hungarian patent HU 195,926. According to the invention the emulsion is resolved electrochemically. The separated emulsifier phase is removed, and the contaminant content of the purified phase is lowered under a predetermined value. The essential feature of the invention is that first the conditions corresponding to the minimum value of emulsion stability are generated, and then the so-prepared emulsion is resolved. The contaminant content of the purified phase is monitored continuously, with the current density at the electrodes of the decomposition cell being adjusted depending on the extent of achieved decontamination. The contaminant content of the purified phase is further decreased in a subsequent final decontamination phase. An advantage of the invention is that it provides an apparatus and method that are highly controllable due to the measurements performed at different stages of the technological process, and are capable of providing decontamination which conforms to strict requirements.

The DE 4 230 765 discloses a colloid decomposition method for electrochemically resolving emulsion. The method comprising the steps of separating solid contaminants from the emulsion, setting the stability minimum of the emulsion by adjusting the pH, resolving the emulsion in an electrochemical decomposition reactor by passing it between an anode and a cathode.

The DE 3 337 656 discloses a method and apparatus for resolving emulsion, splitting by heating and additional of an acid. The electrolytic step is performed for the separation of metal ions rather than oil from water.

The DE 4 102 175 describes an improved splitting of emulsion, such as cooling lubricants, by adding CO₂ gas to an electrochemical cell.

Known solutions possess the common disadvantage of extremely high energy demand, and of being capable of achieving sufficient decontamination only through a two-phase process. A further common drawback of these solutions is that - due to electric conductivity deteriorating or even decreasing to zero as the oil concentration of the emulsion increases - the electrochemical treatment of emulsions with higher oil concentration is difficult or outright impossible. For instance, known methods are incapable of resolving emulsions (of the W/O type) having an oil concentration higher than 1.5 % with reasonable efficiency.

The objective of the present invention is to provide a method and apparatus that improves upon existing solutions by decreasing the energy demand of the process of water decontamination and produces decontaminated water conforming to the environmental regulations in a single operation. A further objective of the invention is to provide a process capable of electrochemical decomposition of both O/W and W/O type emulsions.

The invention is based on the recognition that the energy demand of the process can be dramatically decreased - while at the same time improving separation efficiency - in case the flocculant is produced *in situ* in an electrochemical decomposition reactor with the application of an electrochemically active material anode and an electrochemically inactive material cathode. The energy balance may be further improved if the solution to be treated is pre-heated before feeding it into the electrochemical decomposition reactor. It has been further recognised that in case the electric conductivity of W/O type emulsions is improved these emulsions may be resolved applying an electrochemical decomposition method.

The electrochemical decomposition method for resolving O/W type emulsions according to the invention is described in Claim 1. Further advantageous steps of the method are described in the dependent claims.

The configuration and operation of the apparatus and methods according to the invention are explained in the present specification with regard to the principal direction of flow of the emulsion. Therefore, particular locations of certain elements are specified e.g. as "upstream of the electrochemical decomposition reactor" or "downstream of the electrochemical decomposition reactor" where "upstream" and "downstream" are taken to mean that the specific element is located upstream or downstream relative to the flow direction of the emulsion.

Apart from the flow rate of the emulsion through the electrochemical decomposition reactor and the electric current intensity, the processes of colloid particle removal, coagulation, and flocculation are dependent on other technological parameters, such as the temperature and pH value of the emulsion, and the concentration of coarser contaminants like sand or clay.

As the first step of the method, solid contaminants are separated and removed from the emulsion before electrochemical resolving. According to an advantageous step of the method the emulsion is passed through a pre-settlement tank and subsequently through a hydrocyclone and/or initial filter, where the most part of solid contaminants is separated.

The emulsion - from which solid contaminants have already been removed - is fed into the electrochemical decomposition reactor through a heat regenerator. According to a preferred embodiment of the apparatus the heat regenerator is implemented as a counter-flow, recuperative heat exchanger. The temperature of the emulsion is set preferably to 10-70°C, more preferably to 25-50°C. The energy demand of the process may be decreased by utilizing the decontaminated water phase of the emulsion for pre-heating the emulsion. In case the temperature of decontaminated water is not high enough to set the desired temperature of the emulsion, a preferred embodiment of the invention has an auxiliary heat regenerator disposed in the decontaminated water line. The heat regenerator is implemented in this case also as a recuperative heat exchanger, which is connected to a pre-heater. The pre-heater may be operated utilizing electric energy, natural gas, or solar energy.

In the electrochemical decomposition reactor the O/W type emulsion is fed between an electrochemically active material anode and an electrochemically inactive material cathode. The anode may be made of iron and/or aluminium, while the cathode may be made of stainless steel or graphite. The anode is preferably made from aluminium metal, more preferably high-grade aluminium of higher than 97.5% purity that is applied for the *in situ* electrochemical production of poly-aluminium hydroxide. The amount of the produced poly-aluminium hydroxide is controlled by adjusting the electric current flowing through the electrodes and the rate of emulsion flow between the electrodes. The electrodes are arranged preferably parallel with each other, with the emulsion being fed between them such that the emulsion introduction point is disposed lower than the emulsion discharge point. The electrodes are preferably arranged vertically, the emulsion being introduced at the bottom in an upward direction.

During the emulsion resolving process colloid particles are bound at the surface of the poly-aluminium hydroxide flocks and agglomerate into a foam that floats to the fluid surface. Surfacing of the foam is facilitated by that - apart from aluminium electrochemically dissolving at the anode - hydrogen gas is formed at the cathode. The reactions are described in the following formulas:

Anode: Al → Al³⁺ + 3e⁻

Cathode: 2e⁻ +2H₂O → 2OH⁻+H₂

The H₂ gas that forms at the cathode urges upwards the poly-aluminium hydroxide flocks, aiding the formation of a foam at the surface of the fluid.

In the method according to the invention the volumetric flow rate and the electric current flowing between the electrodes are adjusted such that introduction rate of aluminium into the solution is preferably between 1-1000 mg/l Al³⁺, more preferably between 1-100 mg/l Al³⁺.

According to a further advantageous step of the method the electric current flowing through the electrodes is periodically adjusted between a lower current intensity sustained for a longer period and a higher current intensity sustained for a shorter period. Higher current intensity is applied in a cleaning phase where the more intensive gas generation helps preventing deposit formation on the electrodes. According to an advantageous step of the method an anode current density of 0.05-0.3 A/dm² and a cathode current density of 0.1-0.9 A/dm² are sustained for 2 to 2.5 minutes, and subsequently an anode current density of 0.350-0.357 A/dm² and a cathode current density of 0.5-0.51 A/dm² are generated for 2 second, this cycle being repeated during the process.

The increasingly thick foam layer is discharged from the electrochemical decomposition reactor into the foam receiving tank where the foam coagulates and collapses. The decontaminated water that still contains a low amount of floating poly-aluminium hydroxide flocks is fed to a final settlement tank and/or to a final filter, where the poly-aluminium hydroxide remaining in the water is settled. Decontaminated water is then discharged and utilized for pre-heating the emulsion in a heat regenerator.

In decontamination processes of colloid-containing solutions the minimum of emulsion stability lies between pH 6-8. According to the present invention the pH value of the emulsion is set to match the stability minimum utilizing a control unit. In a preferred way of carrying out the method the pH of the emulsion is controlled utilizing the measured pH values of the decontaminated water. For measuring the pH of decontaminated water a pH meter is disposed downstream of the electrochemical decomposition reactor in the discharge line of decontaminated water. The desired pH value is set by introducing the necessary amount of reagent from the reagent container to a reagent feeder disposed upstream of the electrochemical decomposition reactor. For pH adjustment an acid, preferably hydrochloric acid (HCl) is applied. According to a further preferred step of the method the pH of the emulsion is adjusted such that the pH value of the decontaminated water is between 6-8, preferably 7 ± 0.25.

The invention also relates to a method for resolving emulsions of the W/O type, as specified in Claim 6.

Raised oil concentration decreases the electric conductivity of emulsions. Conductivity may be improved to a small extent by adding conducting salts, such as sodium chloride or sodium sulphate. A significant increase of oil content and/or the application of powerful, high-stability emulsifiers results in the "switching" of the emulsion type: the electrically conductive O/W emulsion switches to a W/O type emulsion. The electric conductivity of W/O type emulsions is significantly lower than the conductivity of the O/W type, and thus the flocculants cannot be introduced by electrochemical means. Therefore, these emulsions cannot be resolved utilizing electrochemical emulsion breaking apparatus. An essential characteristics of our invention is that W/O type emulsions are rendered suitable for resolving in electrochemical colloid resolving apparatus by raising their electric conductivity, thereby making W/O type emulsions "switch" into the O/W type. An important recognition of our invention is that the method and apparatus developed for electrochemically resolving emulsions may be capable of resolving W/O type emulsions in case a unit adapted for emulsion type switching is added. A further recognition is that emulsion type switching may be facilitated by the addition of carbon dioxide (CO₂) gas.

Before and after the emulsion type "switching" phase the steps of the method for resolving W/O type emulsions are the same as the steps described above with regard to O/W emulsions.

According to the invention, after decontamination CO₂ is absorbed in the emulsion. The gas penetrates the oil film surrounding the water droplets, changing their micro-structure as well as their pH value. Due to the emulsion type switching the oil droplets become surrounded by water, which causes the electric conductivity of the emulsion to rise and reach the electric conductivity of the O/W type emulsion. Thereby the emulsion becomes fit for being resolved in the electrochemical decomposition reactor.

During the process CO₂ gas is introduced either continuously or discontinuously into the emulsion According to an advantageous step of the method, 2-20 g/dm³ of CO₂ gas is absorbed in the emulsion.

An apparatus for carrying out the above described methods is also the object of the present invention. This apparatus is specified in Claim 11. Further advantageous embodiments are described in the dependent claims.

The apparatus for resolving O/W type emulsions has an emulsion container connected through a pre-settlement tank and feed pump to a hydrocyclone and/or initial filter utilizing conventional pipe conduits and closing means disposed therein. The pre-settlement tank and also the hydrocyclone and/or the initial filter are included for removing smaller or bigger solid contaminant particles.

The hydrocyclone and/or the initial filter are connected through a heat regenerator and feed pump to an electrochemical decomposition reactor. An anode, made of electrochemically active material and connected to a power supply, as well as an electrochemically inactive material cathode are arranged in the electrochemical decomposition reactor. The emulsion is introduced between the anode and the cathode such that the emulsion introduction point is located lower than the emulsion discharge point. The electrochemical decomposition reactor may have a cylindrically symmetric or axially elongated shape.

The emulsion - from which solid contaminants have already been removed - is fed by a feed pump into the electrochemical decomposition reactor through a heat regenerator and reagent feeder. According to a preferred embodiment the heat regenerator is implemented as a counter-flow heat exchanger, and in a further preferred embodiment it is implemented as a recuperative heat exchanger, through which the decontaminated water resulting from the emulsion resolving process is passed as a heat transfer medium. In a still further preferred embodiment of the invention the decontaminated water line is passed through an auxiliary heat regenerator upstream of the heat regenerator. In the auxiliary heat regenerator water heated by a pre-heater is applied as heat transfer medium. According to a further preferred embodiment of the invention the auxiliary heat regenerator is implemented as a counter-flow, recuperative heat exchanger where the pre-heater may be heated applying electric energy, natural gas, or solar energy.

The electrochemical decomposition reactor is connected with a receiving tank that is adapted for receiving the foam produced in the process and the settled and/or filtered particles.

The decontaminated water is discharged from the electrochemical decomposition reactor by a discharge pump through a final filter and/or final settlement tank and the heat regenerator.

The pH of the emulsion entering the electrochemical decomposition reactor is adjusted by controlling the pH value of the decontaminated water. Controlling the pH is performed applying a pH meter disposed downstream of the electrochemical decomposition reactor in the decontaminated water line, a reagent container controlled by a controller connected to the pH meter, and a reagent feeder disposed upstream of the electrochemical decomposition reactor.

Elements of the apparatus according to the invention are connected by conventional conduits containing closing means.

In addition to the elements of the above described apparatus, the inventive apparatus for the electrochemical decomposition of W/O type emulsions is equipped with elements adapted for storing and absorbing CO₂ gas.

Also in this case, the emulsion container of the apparatus adapted for resolving O/W type emulsions is connected through a pre-settlement tank and feed pump to a hydrocyclone and/or initial filter. The hydrocyclone and/or the initial filter are connected through a discontinuous and/or continuous CO₂ feeder attached to a CO₂ gas tank to the heat regenerator, and through a feed pump to the electrochemical decomposition reactor. In a preferred embodiment of the invention the apparatus has two discontinuous CO₂ feeders, CO₂ gas being introduced into one of the CO₂ feeders and at the same time the emulsion being introduced into the other CO₂ feeder. According to a further preferred embodiment the discontinuous CO₂ feeder is implemented as a closed tank, wherein the introduced emulsion and the CO₂ gas get mixed. According to a still further preferred embodiment of the invention the continuous CO₂ feeder is implemented as a gas-liquid mixing reactor. From this reactor the emulsion is discharged through a pressure-reducing piece.

In this case as well, the elements of the apparatus according to the invention are connected by conventional conduits containing closing means. Closing means are preferably stop valves adapted for preventing or allowing the flow of the emulsion or the decontaminated water. Operating the apparatus by opening or closing specific valves is described in greater detail below.

The apparatus according to the invention is explained in more detail referring to the accompanying drawings where
Fig. 1 shows the inventive apparatus for resolving O/W type emulsions, and
Fig. 2 shows the apparatus for resolving W/O type emulsions.

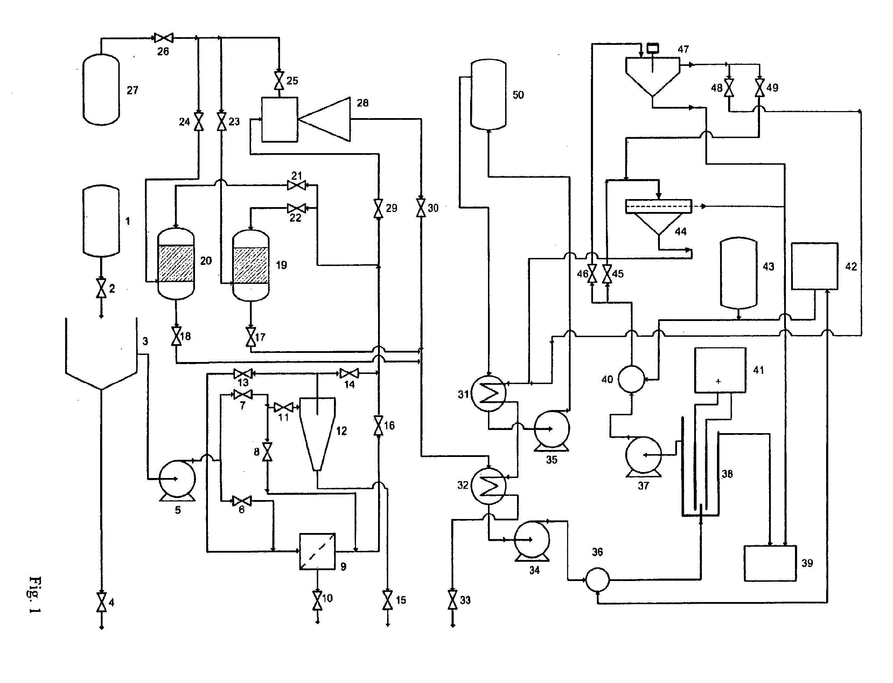

In Fig. 1 an apparatus adapted for resolving O/W type emulsions is presented. The emulsion is fed from the emulsion container 1 to a pre-settlement tank 3 where coarser contaminant particles are settled from the solution. Settled particles may be discharged through a pipe with a valve 4. A feed pump 5 is applied to feed the emulsion from the pre-settlement tank 3 to a hydrocyclone 12 and/or an initial filter 9 through valves 6,7,8,11,13 for separating the most part of finer contaminant particles. Valves 6,7,8,11,13 are opened or shut off depending on the extent to which the emulsion to be resolved is contaminated. The separated contaminants may be discharged from the hydrocyclone 12 through valve 15, and from the initial filter 9 through valve 10.

The emulsion - from which solid contaminants have already been removed - is fed into a heat regenerator 32 through valves 14, 16. The heat regenerator 32 is implemented as a counter-flow, recuperative heat exchanger where the emulsion is heated by the counter-flow of warm decontaminated water. Upstream of the heat regenerator 32 an auxiliary heat regenerator is disposed in the flow path of decontaminated water. The auxiliary heat regenerator 31 is also a counter-flow, recuperative heat exchanger where the decontaminated water is further heated by a warm medium fed from a pre-heater 50. With the help of the auxiliary heat regenerator 31 the temperature of the emulsion can be set to the optimum value even if the heat content of the decontaminated water in itself is not sufficient for reaching the optimum value.

The heated emulsion is fed by a feed pump 34 to an electrochemical decomposition reactor 38 through reagent feeder 36. The reagent feeder 36 is attached to a reagent container 43 through a controller 42. The controller is applied for opening or closing the reagent container 43 and controlling the reagent feeder 36 depending on the pH values measured by pH meter 40 disposed in the decontaminated water discharge line.

To perform the coagulation and flocculation reactions necessary for emulsion breaking the emulsion is fed to an electrochemical decomposition reactor 38. The anode and cathode disposed in the electrochemical decomposition reactor 38 are connected to a power supply 41. The electrodes are implemented as vertically arranged concentric tubes, where the emulsion is fed between the electrodes at the bottom in an upward direction.

In the inter-electrode space the poly-aluminium hydroxide flocks float towards the surface, urged partially by the floating force of H₂ gas, and form a foam. The foam overflows the inner edge of the electrodes and is discharged to a foam receiving tank 39 through foam outlets arranged in the electrodes. The water, still containing a low amount of poly-aluminium hydroxide flocks, flows through valves 45,46,48,49 to the final settlement tank 47 and/or the final filter 44, where the remaining flocks are settled and/or separated. Valves 45,46,48,49 are shut off or opened depending on the extent to which the water has to be decontaminated. Decontaminated water is discharged from the apparatus through an auxiliary heat regenerator 31 and a heat regenerator 32 and valve 33.

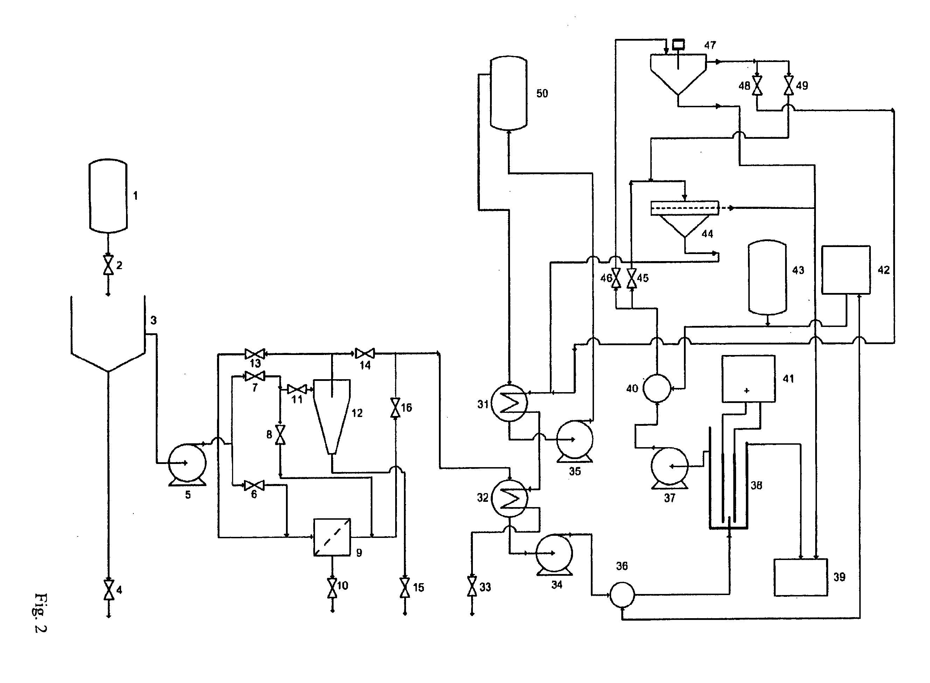

Fig. 2 shows an apparatus for resolving W/O type emulsions. Apart from elements included for storing and supplying CO₂ gas, the apparatus is identical to the above described one. Similar elements are referred to using the same reference numerals and are not described in detail again.

Those elements of the apparatus that are located between the emulsion container 1 and the hydrocyclone 12 and initial filter 9 are identical to the elements have already been removed, is fed through valves 14,16,21,22, 29 into a discontinuous CO₂ feeder 19, 20 or a continuous CO₂ feeder 28. The discontinuous CO₂ feeder 19, 20 and the continuous CO₂ feeder 28 are connected to a CO₂ gas tank 27 through valves 23,24,25,26. After residing in the gas feeders for an appropriate amount of time the emulsion is fed into the heat regenerator 32 through valves 17,18,30. Other elements of the apparatus are arranged in the same manner as in the apparatus of Fig. 1.

Through the application of stop valves, and more particularly through the programmed opening and shutting of these valves the apparatus is rendered extremely flexible and becomes applicable for a wide range of tasks. In the following the various modes of operation of the apparatus adapted for resolving W/O type emulsions are presented. It is easily apprehended that by shutting off or opening the appropriate closure means (valves) the emulsion may be passed through different elements of the apparatus. Thus, the apparatus can be applied for breaking emulsions of a wide range of composition and degree of contamination.

This apparatus can also be applied for resolving O/W type emulsions. In that case the valves 23,24,25,26 of the CO₂ gas tank 27 and the continuous and/or the discontinuous CO₂ gas feeders are closed.

Possible modes of operation of emulsion breaking with the application of the apparatus are summarized in the below table, together with the corresponding valve positions. For the sake of easier comprehension, some important elements of the apparatus are identified using the following abbreviations, making it easier to follow the particular flow paths in the table.
- HC: hydrocyclone (12)
- IF: initial filter (9)
- DC: discontinuous CO₂ feeder (19,20)
- FF: final filter (44)
- CC: continuous CO₂ feeder (28)
- FS: final settlement tank (47)

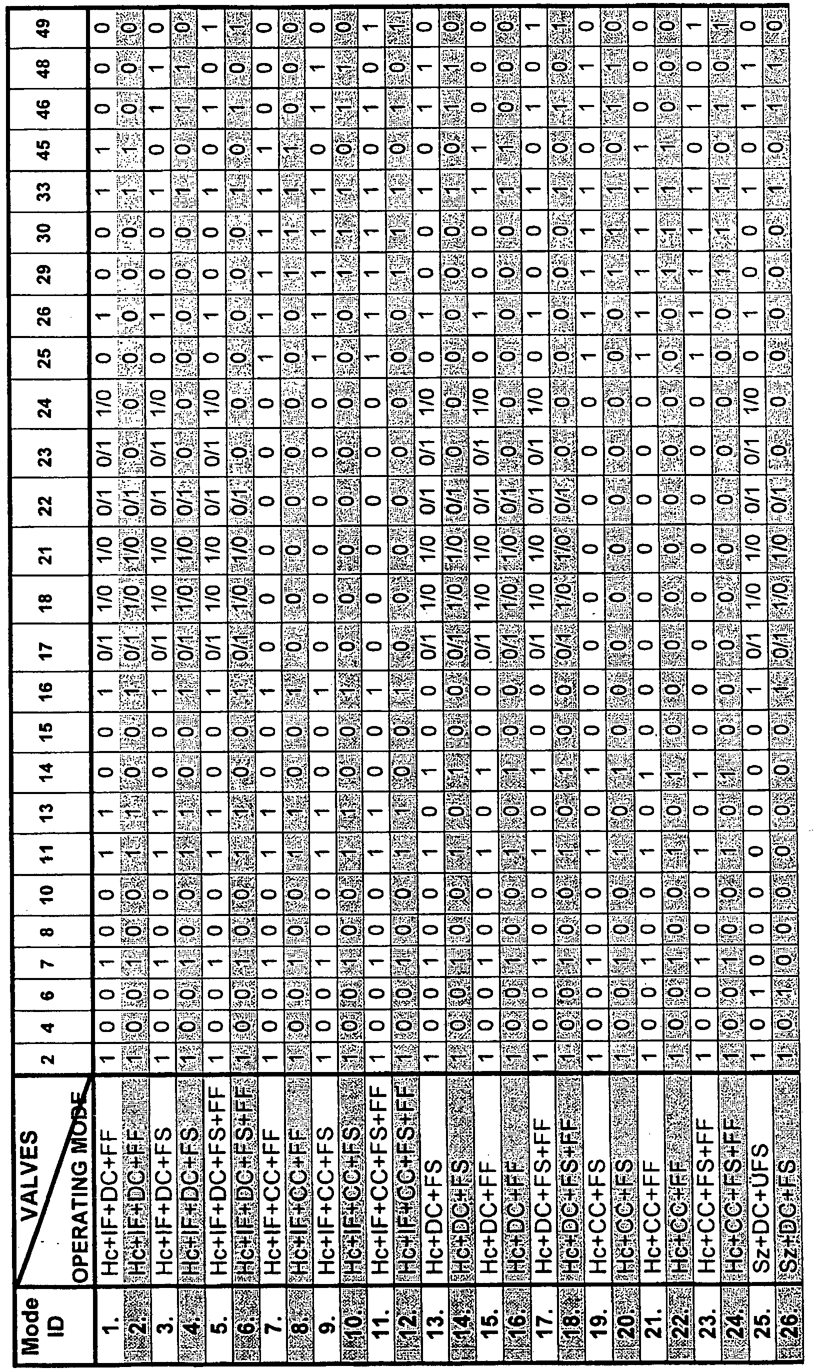

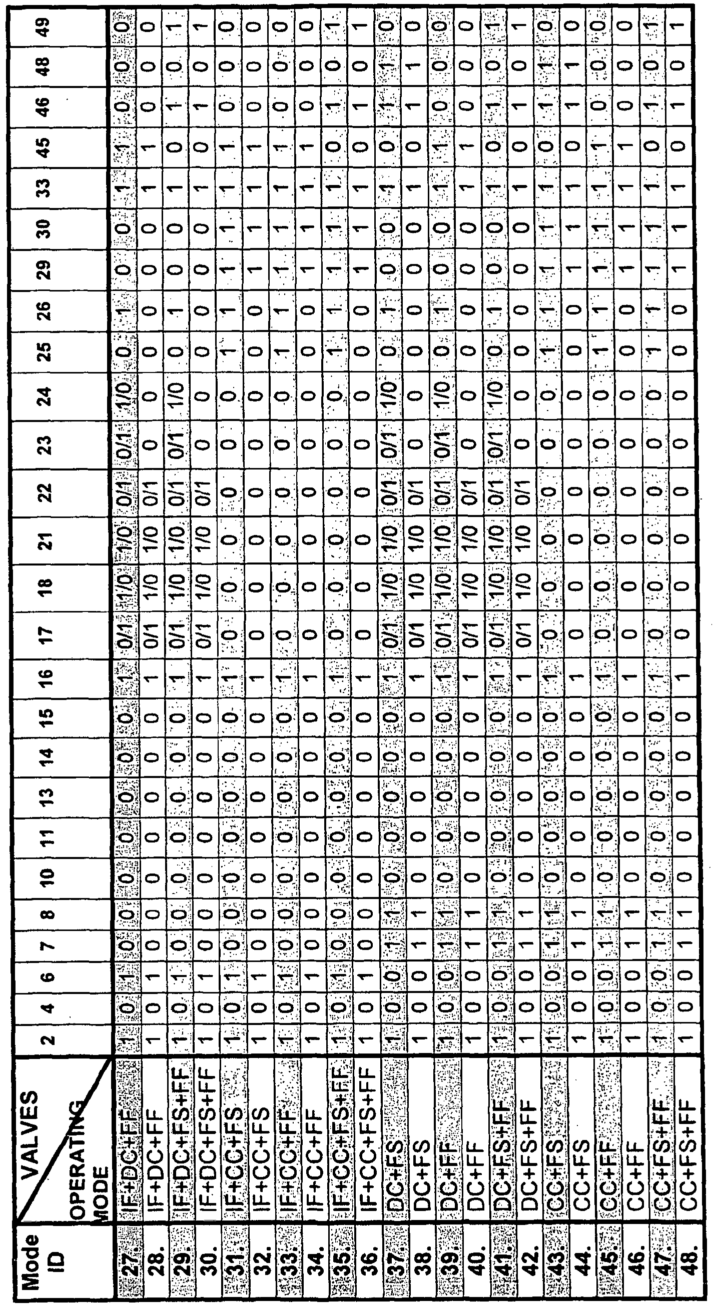

### FLOW PATHS OF THE VARIOUS OPERATING MODES

1. HC+IF+DC+FF = hydrocyclone (12) - initial filter (9) - discontinuous CO₂ feeder (19, 20) - final filter (44); CO₂ gas tank (27) open
   Emulsion container (1) - valve (2) - pre-settlement tank (3) - feed pump (5) - valve (7) - valve (11) - hydrocyclone (12) - valve (13) - initial filter (9) - valve (16) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (45) - final filter (44) - auxiliary heat regenerator (31) - heat regenerator (32) - valve (33). Through the CO₂ gas tank (27) - valve (26) - valve (23/24) path CO₂ gas is fed alternately into one of the discontinuous CO₂ feeders (19/20).
2. HC+IF+DC+FF = hydrocyclone (12) - initial filter (9) - discontinuous CO₂ feeder (19, 20) - final filter (44); CO₂ gas tank (27) closed
   Emulsion container (1) - valve (2) - pre-settlement tank (3) - feed pump (5) - valve (7) - valve (11) - hydrocyclone (12) - valve (13) - initial filter (9) - valve (16) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (45) - final filter (44) - auxiliary heat regenerator (31) - heat regenerator (32) - valve (33).
3. HC+IF+DC+FS = hydrocyclone (12) - initial filter (9) - discontinuous CO₂ feeder (19, 20) - final settlement tank (47); CO₂ tank open
   Emulsion container (1) - valve (2) - pre-settlement tank (3) - feed pump (5) - valve (7) - valve (11) - hydrocyclone (12) - valve (13) - initial filter (9) - valve (16) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (46) - final settlement tank (47) - valve (48) - auxiliary heat regenerator (31) - heat regenerator (32) - valve (33).
   Through the CO₂ gas tank (27) - valve (26) - valve (23/24) path CO₂ gas is fed alternately into one of the discontinuous CO₂ feeders (19/20).
4. HC+IF+DC+FS = hydrocyclone (12) - initial filter (9) - discontinuous CO₂ feeder (19, 20) - final settlement tank (47); CO₂ gas tank closed
   Emulsion container (1) - valve (2) - pre-settlement tank (3) - feed pump (5) - valve (7) - valve (11) - hydrocyclone (12) - valve (13) - initial filter (9) - valve (16) - valve (21/22) - discontinuous CO₂ feeder (20/19) - valve (18/17) - heat regenerator (32) - .feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33).
5. HC+IF+DC+FS+FF = hydrocyclone (12) - initial filter (9) - discontinuous CO₂. feeder (19, 20) - final settlement tank (47) - final filter (44); CO₂ gas tank open.
   Emulsion container (1) - valve (2) - pre-settlement tank (3) - feed pump (5) - valve (7) - valve (11) - hydrocyclone (12) - valve (13) - initial filter (9) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (23/24) path CO₂ gas is fed alternately into one of the discontinuous CO₂ feeders (19/20).
6. HC+IF+DC+FS+FF= hydrocyclone (12) - initial filter (9) - discontinuous CO₂ feeder (19, 20) - final settlement tank (47) - final filter (44); CO₂ gas tank closed
   Emulsion container (1) - valve (2) - pre-settlement tank (3) - feed pump (5) - valve (7) - valve (11) - hydrocyclone (12) - valve (13) - initial filter (9) - valve (16) - valve (21/22) - discontinuous CO₂ feeder (20/19) - valve (18/17) - recuperative heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - recuperative heat regenerator (32) - valve (33).
7. HC+IF+CC+FF = hydrocyclone (12) - initial filter (9) - continuous CO₂ feeder (28) - final filter (44); CO₂ gas tank open
   Emulsion container (1) - valve (2) - pre-settlement tank (3) - feed pump (5) - valve (7) - valve (11) - hydrocyclone (12) - valve (13) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
   Through the CO₂ gas tank (27) - valve (26) - valve (25) path CO₂ is fed to the continuous CO₂ feeder (28).
8. HC+IF+CC+FF = hydrocyclone (12) - initial filter (9) - continuous CO₂ feeder (28) - final filter (44); CO₂ gas tank closed
   Emulsion container (1) - valve (2) - pre-settlement tank (3) - feed pump (5) - valve (7) - valve (11) - hydrocyclone (12) - valve (13) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
9. HC+IF+CC+FS = hydrocyclone (12) - initial filter (9) - continuous CO₂ feeder (28) - final settlement tank (47); CO₂ gas tank open
   Emulsion container (1) - valve (2) - pre-settlement tank (3) - feed pump (5) - valve (7) - valve (11) - hydrocyclone (12) - valve (13) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
10. HC+IF+CC+FS = hydrocyclone (12) - initial filter (9) - continuous CO₂ feeder (28) - final settlement tank (47); CO₂ gas tank closed
   Emulsion container (1) - valve (2) - pre-settlement tank (3) - feed pump (5) - valve (7) - valve (11) - hydrocyclone (12) - valve (13) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33).
11. HC+IF+CC+FS+FF = hydrocyclone (12) - initial filter (9) - continuous CO₂ feeder (28) - final settlement tank (47) - final filter (44); CO₂ gas tank open Emulsion container (1) - valve (2) - pre-settlement tank (3) - feed pump (5) - valve (7) - valve (11) - hydrocyclone (12) - valve (13) - initial filter (9) - valve (16) - valve (29) - continuous CO₂ feeder (28) - valve (30) - heat regenerator (32) - feed pump (34) - reagent feeder (36)- electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
12. HC+IF+CC+FS+FF = hydrocyclone (12) - initial filter (9) - continuous CO₂ feeder (28) - final settlement tank (47) - final filter (44); CO₂ gas tank closed
   Emulsion container (1) - valve (2) - pre-settlement tank (3) - feed pump (5) - valve (7) - valve (11) - hydrocyclone (12) - valve (13) - initial filter (9) - valve (16) - valve (29) - continuous CO₂ feeder (28) - valve (30) - heat regenerator (32) - feed pump (34) - reagent feeder (36)- electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
13. HC+DC+FS = hydrocyclone (12) - discontinuous CO₂ feeder (19, 20) - final settlement tank (47); CO₂ gas tank open
   Emulsion container (1) - valve (2) - pre-settlement tank (3) - feed pump (5) - valve (7) - valve (11) - hydrocyclone (12) - valve (14) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) -- valve (46) - final settlement tank (47) - valve (48) - auxiliary heat regenerator (31) - heat regenerator (32) - valve (33). Through the CO₂ gas tank (27) - valve (26) - valve (23/24) path CO₂ gas is fed alternately into one of the discontinuous CO₂ feeders (19/20).
14. HC+DC+FS= hydrocyclone (12) - discontinuous CO₂ feeder (19, 20) - final settlement tank (47); CO₂ gas tank closed
   Emulsion container (1) - valve (2) - pre-settlement tank (3) - feed pump (5) - valve (7) - valve (11) - hydrocyclone (12) - valve (14) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (46) - final settlement tank (47) - valve (48) - auxiliary heat regenerator (31) - heat regenerator (32) - valve (33)
15. HC+DC+FF = hydrocyclone (12) - discontinuous CO₂ feeder (19, 20) - final filter (44); CO₂ gas tank open
   Emulsion container (1) - valve (2) - pre-settlement tank (3) - feed pump (5) - valve (7) - valve (11) - hydrocyclone (12) - valve (14) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
   Through the CO₂ gas tank (27) - valve (26) - valve (23/24) path CO₂ gas is fed alternately into one of the discontinuous CO₂ feeders (19/20).
16. HC+DC+FF = hydrocyclone (12) - discontinuous CO₂ feeder (19, 20) - final filter (44); CO₂ gas tank closed
   Emulsion container (1) - valve (2) - pre-settlement tank (3) - feed pump (5) - valve (7) - valve (11) - hydrocyclone (12) - valve (14) - valve (21/22) discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
17. HC+DC+FS+FF = hydrocyclone (12) - discontinuous CO₂ feeder (19, 20) - final settlement tank (47) - final filter (44); CO₂ tank open
   Emulsion container (1) - valve (2) - pre-settlement tank (3) - feed pump (5) - valve (7) - valve (11) - hydrocyclone (12) - valve (14) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (23/24) path CO₂ is alternately fed into one of the discontinuous CO₂ feeders (19/20).
18. HC+DC+FS+FF= hydrocyclone (12) - discontinuous CO₂ feeder (19, 20) - final settlement tank (47) - final filter (44); CO₂ gas tank closed
   Emulsion container (1) - valve (2) - pre-settlement tank (3) - feed pump (5) - valve (7) - valve (11) - hydrocyclone (12) - valve (14) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
19. HC+CC+FS= hydrocyclone (12) - continuous CO₂ feeder (28) - final settlement tank (47); CO₂ gas tank open
   Emulsion container (1) - valve (2) - pre-settlement tank (3) - feed pump (5) - valve (7) - valve (11) - hydrocyclone (12) - valve (14) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
20. HC+CC+FS= hydrocyclone (12) - continuous CO₂ feeder (28) - final settlement tank (47); CO₂ gas tank closed
   Emulsion container (1) - valve (2) - pre-settlement tank (3) - feed pump (5) - valve (7) - valve (11) - hydrocyclone (12) - valve (14) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33).
21. HC+CC+FF= hydrocyclone (12) - continuous CO₂ feeder (28) - final filter (44); CO₂ gas tank open
   Emulsion container (1) - valve (2) - pre-settlement tank (3) - feed pump (5) - valve (7) - valve (11) - hydrocyclone (12) - valve (14) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
22. HC+CC+FF= hydrocyclone (12) - continuous CO₂ feeder (28) - final filter (44); CO₂ gas tank closed
   Emulsion container (1) - valve (2) - pre-settlement tank (3) - feed pump (5) - valve (7) - valve (11) - hydrocyclone (12) - valve (14) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
23. CC+FS+FF= hydrocyclone (12) - continuous CO₂ feeder (28) - final settlement tank (47) - final filter (44); CO₂ gas tank open
   Emulsion container (1) - valve (2) - pre-settlement tank (3) - feed pump (5) - valve (7) - valve (11) - hydrocyclone (12) - valve (14) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
24. HC+CC+FS+FF= hydrocyclone (12) - continuous CO₂ feeder (28) - final settlement tank (47) - final filter (44), CO₂ gas tank closed
   Emulsion container (1) - valve (2) - pre-settlement tank (3) - feed pump (5) - valve (7) - valve (11) - hydrocyclone (12) - valve (14) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
25. IF+DC+FS = initial filter (9) - discontinuous CO₂ feeder (19, 20) - final settlement tank (47); CO₂ gas tank open
   Emulsion container (1) - valve (2) - pre-settlement tank (3) - feed pump (5) - valve (6) - initial filter (9) - valve (16) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) -- valve (46) - final settlement tank (47) - valve (48) - auxiliary heat regenerator (31) - heat regenerator (32) - valve (33).
   Through the CO₂ gas tank (27) - valve (26) - valve (23/24) path CO₂ gas is alternately fed into one of the discontinuous CO₂ feeders (19/20)
26. IF+DC+FS = initial filter (9) - discontinuous CO₂ feeder (19, 20) - final settlement tank (47), CO₂ gas tank closed
   Emulsion container (1) - valve (2) - pre-settlement tank (3) - feed pump (5) - valve (6) - initial filter (9) - valve (16) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (46) - final settlement tank (47) - valve (48) - auxiliary heat regenerator (31) - heat regenerator (32) - valve (33).
27. IF+DC+FF = initial filter (9) - discontinuous CO₂ feeder (19, 20) - final filter (44); CO₂ gas tank open
   Emulsion container (1) - valve (2) - pre-settlement tank (3) - feed pump (5) - valve (6) - initial filter (9) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33)
   Through the CO₂ gas tank (27) - valve (26) - valve (23/24) path CO₂ gas is alternately fed into one of the discontinuous CO₂ feeders (19/20)
28. IF+DC+FF = initial filter (9) - discontinuous CO₂ feeder (19, 20) - final filter (44), CO₂ gas tank closed
   Emulsion container (1) - valve (2) - pre-settlement tank (3) - feed pump (5) - valve (6) - initial filter (9) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
29. IF+DC+FS+FF = initial filter (9) - discontinuous CO₂ feeder (19, 20) - final settlement tank (47) - final filter (44); CO₂ gas tank open
   Emulsion container (1) - valve (2) - pre-settlement tank (3) - feed pump (5) - valve (6) - initial filter (9) - valve (16) - valve (21/22) - discontinuous CO₂ feeder (20/19) - valve (18/17) - heat regenerator (32) - feed pump (34) - reagent feeder (36)- electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (23/24) path CO₂ gas is alternately fed into one of the discontinuous CO₂ feeders (19/20)
30. IF+DC+FS+FF = initial filter (9) - discontinuous CO₂ feeder (19, 20) - final settlement tank (47) - final filter (44); CO₂ gas tank closed
   Emulsion container (1) - valve (2) - pre-settlement tank (3) - feed pump (5) - valve (6) - initial filter (9) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33)
31. IF+CC+FS = initial filter (9) - continuous CO₂ feeder (28) - final settlement tank (47); CO₂ gas tank open
   Emulsion container (1) - valve (2) - pre-settlement tank (3) - feed pump (5) - valve (6) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33).
   Through the CO₂ gas tank (27) - valve (26) - valve (25) path CO₂ gas is fed to the continuous CO₂ feeder (28)
32. IF+CC+FS = initial filter (9) - continuous CO₂ feeder (28) - final settlement tank (47); CO₂ gas tank closed
   Emulsion container (1) - valve (2) - pre-settlement tank (3) - feed pump (5) - valve (6) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (48) - auxiliary heat regenerator (31) - heat regenerator (32) - valve (33)
33. IF+CC+FF = initial filter (9) - continuous CO₂ feeder (28) - final filter (44); CO₂ gas tank open
   Emulsion container (1) - valve (2) - pre-settlement tank (3) - feed pump (5) - valve (6) - initial filter (9) - valve (16) - valve (29) - continuous CO₂ feeder (28) - valve (30) - heat regenerator (32) - feed pump (34) -reagent feeder (36)-electrochemical decomposition reactor (38) - discharge pump (37) - pH meter (40) - valve (45) - final filter (44) - auxiliary heat regenerator (31) - heat regenerator (32) - valve (33)
   Through the CO₂ gas tank (27) - valve (26) - valve (25) path CO₂ is fed into the continuous CO₂ feeder (28)
34. IF+CC+FF = initial filter (9) - continuous CO₂ feeder (28) - final filter (44), CO₂ gas tank closed
   Emulsion container (1) - valve (2) - pre-settlement tank (3) - feed pump (5) - valve (6) - initial filter (9) - valve (16) - valve (29) - continuous CO₂ feeder (28) - valve (30) - heat regenerator (32) - feed pump (34) - reagent feeder (36)-electrochemical decomposition reactor (38) - discharge pump (37) - pH meter (40) - valve (45) - final filter (44) - auxiliary heat regenerator (31) - heat regenerator (32) - valve (33).
35. IF+CC+FS+FF= initial filter (9) - continuous CO₂ feeder (28) - final settlement tank (47) - final filter (44); CO₂ gas tank open
   Emulsion container (1) - valve (2) - pre-settlement tank (3) - feed pump (5) - valve (6) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) -- valve (46) - final settlement tank (47) - valve (49) - final filter (44) - auxiliary heat regenerator (31) - heat regenerator (32) - valve (33)
   Through the CO₂ gas tank (27) - valve (26) - valve (25) path CO₂ gas is fed to the continuous CO₂ feeder (28)
36. IF+CC+FS+FF = initial filter (9) - continuous CO₂ feeder (28) - final settlement tank (47) - final filter (44); CO₂ gas tank closed
   Emulsion container (1) - valve (2) - pre-settlement tank (3) - feed pump (5) - valve (6) - initial filter (9) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) -- valve (46) - final settlement tank (47) - valve (49) - final filter (44) - auxiliary heat regenerator (31) - heat regenerator (32) - valve (33).
37. DC+FS = discontinuous CO₂ feeder (19, 20) - final settlement tank (47); CO₂ gas tank open
   Emulsion container (1) - valve (2) - pre-settlement tank (3) - feed pump (5) - valve (7) - valve (8) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) -- valve (46) - final settlement tank (47) - valve (48) - auxiliary heat regenerator (31) - heat regenerator (32) - valve (33)
   Through the CO₂ gas tank (27) - valve (26) - valve (23/24) path CO₂ gas is alternately fed into one of the discontinuous CO₂ feeders (19/20)
38. DC+FS= discontinuous CO₂ feeder (19, 20) - final settlement tank (47); CO₂ gas tank closed
   Emulsion container (1) - valve (2) - pre-settlement tank (3) - feed pump (5) - valve (7) - valve (8) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) -- valve (46) - final settlement tank (47) - valve (48) - auxiliary heat regenerator (31) - heat regenerator (32) - valve (33).
39. DC+FF = discontinuous CO₂ feeder (19, 20) - final filter (44); CO₂ gas tank open
   Emulsion container (1) - valve (2) - pre-settlement tank (3) - feed pump (5) - valve (7) - valve (8) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
   Through the CO₂ gas tank (27) - valve (26) - valve (23/24) path CO₂ gas is fed alternately into one of the discontinuous CO₂ feeders (19/20).
40. DC+FF = discontinuous CO₂ feeder (19, 20) - final filter (44); CO₂ gas tank closed
   Emulsion container (1) - valve (2) - pre-settlement tank (3) - feed pump (5) - valve (7) - valve (8) - valve (16) - valve (21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
41. DC+FS+FF= discontinuous CO₂ feeder (19, 20) - final settlement tank (47) - final filter (44); CO₂ gas tank open
   Emulsion container (1) - valve (2) - pre-settlement tank (3) - feed pump (5) - valve (7) - valve (8) - valve (16) - valve 21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (23/24) path CO₂ gas is fed alternately into one of the discontinuous CO₂ feeders (19/20).
42. DC+FS+FF= discontinuous CO₂ feeder (19, 20) - final settlement tank (47) - final filter (44); CO₂ gas tank closed
   Emulsion container (1) - valve (2) - pre-settlement tank (3) - feed pump (5) - valve (7) - valve (8) - valve (16) - valve 21/22) - discontinuous CO₂ feeder (20/19) - valve (18/17) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
43. CC+FS = continuous CO₂ feeder (28) - final settlement tank (47), CO₂ gas tank open
   Emulsion container (1) - valve (2) - pre-settlement tank (3) - feed pump (5) - valve (7) - valve (8) - valve (16) - valve (29) - continuous CO₂ feeder (28) - valve (30) - heat regenerator (32) - feed pump (34) - reagent feeder (36)-electrochemical decomposition reactor (38) - discharge pump (37) - pH meter (40) - valve (46) - final settlement tank (47) - valve (48) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
44. CC+FS = continuous CO₂ feeder (28) - final settlement tank (47), CO₂ gas tank closed
   Emulsion container (1) - valve (2) - pre-settlement tank (3) - feed pump (5) - valve (7) - valve (8) - valve (16) - valve (29) - continuous CO₂ feeder (28) - valve (30) - heat regenerator (32) - feed pump (34) - reagent feeder (36)-electrochemical decomposition reactor (38) - discharge pump (37) - pH meter (40) - valve (46) - final settlement tank (47) - valve (48) - auxiliary heat regenerator (31) - heat regenerator (32) - valve (33).
45. CC+FF = continuous CO₂ feeder (28) - final filter (44); CO₂ gas tank open
   Emulsion container (1) - valve (2) - pre-settlement tank (3) - feed pump (5) - valve (7) - valve (8) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
46. CC+FF = continuous CO₂ feeder (28) - final filter (44); CO₂ gas tank closed
   Emulsion container (1) - valve (2) - pre-settlement tank (3) - feed pump (5) - valve (7) - valve (8) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (45) - final filter (44) - auxiliary heat regenerator (31) - heat regenerator (32) - valve (33).
47. CC+FS+FF = continuous CO₂ feeder (28) - final settlement tank (47) - final filter (44); CO₂ gas tank open
   Emulsion container (1) - valve (2) - pre-settlement tank (3) - feed pump (5) - valve (7) - valve (8) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).
   Through the CO₂ gas tank (27) - valve (26) - valve (25) path CO₂ gas is introduced into the continuous CO₂ feeder (28).
48. CC+FS+FF = continuous CO₂ feeder (28) - final settlement tank (47) - final filter (44); CO₂ gas tank closed
   Emulsion container (1) - valve (2) - pre-settlement tank (3) - feed pump (5) - valve (7) - valve (8) - valve (16) - valve (29) - continuous CO₂ feeder (28) - valve (30) - heat regenerator (32) - feed pump (34) - reagent feeder (36) - electrochemical decomposition reactor (38) - discharge pump (37) - pH meter (40) - valve (46) - final settlement tank (47) - valve (49) - final filter (44) - auxiliary heat regenerator (31) - heat regenerator (32) - valve (33).

The methods according to the invention are explained in more detail below by way of real-life examples.

### Example 1

An emulsion (discharged from a car wash) containing 2.5 grams/I of oil was resolved utilizing the method and apparatus according to the invention. The emulsion was first filled into the emulsion container 1. From the container the emulsion was then fed at a flow rate adjusted utilizing the feed pump 5 into the heat regenerator 32 through the pre-settlement tank 3 and lhydrocyclone 12. In the heat regenerator 32 the initially cold emulsion was pre-heated utilizing the warm decontaminated water coming from the electrochemical decomposition reactor 38. The pre-heater 50 was applied to supply the necessary heat amount through an auxiliary heat regenerator 31 such that the temperature of the emulsion leaving the regenerator was 45 ± 5 °C. The emulsion to be treated was fed into the electrochemical decomposition reactor 38 through reagent feeder 36.

HCl was supplied through reagent feeder 36 in an amount providing that the pH value of the decontaminated water was 7 ± 0.25 as measured by pH meter 40. Both electrodes of the electrochemical decomposition reactor 38 were implemented as concentric tubes having an effective height of H=500 mm. Anode diameters were dₑ/dᵢ=63/60 mm with the anode being a pipe of 98.5% pure aluminium, while the cathode diameters were dₑ/dᵢ=63/60 mm, the cathode being an externally electropolished KO 36 stainless steel pipe. The pre-heated, pH adjusted emulsion was fed between the electrodes at the bottom in an upward direction. Electric current flowing between the anode and the cathode was adjusted such that a current of 1 ± 0.05 A was generated for a cycle time 2.5 minutes, and subsequently a current of 5 ± 0.05 A was generated for a cycle time of 1 s, and then the current was adjusted to repeat this cycle for the entire duration of the process.

During electrolysis anode current density was in the 0.067-0.074 A/dm² range, while in the cleaning phase it was between 0.350-0.357 A/dm². Cathode current densities were between 0.1-0.9 A/dm² and 0.5-0.51 A/dm² respectively. The volumetric flow rate of the emulsion to be decontaminated is 20 ± 1 l/h with the above current density values.

After decontamination the measured oil concentration was Cₒᵢₗ< 5 mg/l. Electric energy demand of the process was P ≈ 50 Wh/m³ The amount of solid contaminants received in the foam receiving tank 39 was less than 5% of the emulsion treated.

### Example 2

An emulsion used as cutting lubricant, containing 12.5 g/I of oil, was resolved utilizing the apparatus according to the invention. The emulsion was fed into the discontinuous CO₂ feeder where for 10 minutes it was made to absorb 6 g/dm3 of CO₂ gas.

Other process parameters as well as the obtained results were the same as in Example 1.

### List of reference numerals

- 1: emulsion container
- 2: valve
- 3: pre-settlement tank
- 4: valve
- 5: feed pump
- 6: valve
- 7: valve
- 8: valve
- 9: initial filter
- 10: valve
- 11: valve
- 12: hydrocyclone
- 13: valve
- 14: valve
- 15: valve
- 16: valve
- 17: valve
- 18: valve
- 19: discontinuous CO₂ feeder
- 20: discontinuous CO₂ feeder
- 21: valve
- 22: valve
- 23: valve
- 24: valve
- 25: valve
- 26: valve
- 27: CO₂ gas tank
- 28: continuous CO₂ feeder
- 29: valve
- 30: valve
- 31: auxiliary heat regenerator
- 32: heat regenerator
- 33: valve
- 34: feed pump
- 35: circulation pump
- 36: feeder
- 37: discharge pump
- 38: electrochemical decomposition reactor
- 39: receiving tank
- 40: pH meter
- 41: power supply
- 42: controller
- 43: reagent container
- 44: final filter
- 45: valve
- 46: valve
- 47: final settlement tank
- 48: valve
- 49: valve
- 50: pre-heater

## Claims

1. Colloid decomposition method for electrochemically resolving emulsions, primarily O/W type emulsions, comprising the steps of
- separating solid contaminants from the emulsion,
- pre-heating the emulsion utilizing a heat regenerator,
- setting the stability minimum of the emulsion by adjusting the pH,
- resolving the emulsion in an electrochemical decomposition reactor by passing it between an anode made of electrochemically active material and a cathode made of electrochemically inactive material, while the colloid particles of the emulsion are bound in flocks forming a foam utilizing as a flocculants the compound produced in situ from the electrochemically active anode.
- discharging the foam produced in the above step, and
- discharging the decontaminated water through a final filter and/or final settlement tank and a heat regenerator.

2. The method according to Claim 1, **characterised by** that aluminium metal is utilized as anode, adjusting the electric current flowing between the electrodes such that introduction rate of aluminium into the solution is between 1-1000 mg/l Al³⁺, preferably between 1-100 mg/l Al³⁺.

3. The method according to Claim 2, **characterised by** that an anode current density of 0.05-0.3 A/dm² and a cathode current density of 0.1-0.9 A/dm² are sustained for 2 to 2.5 minutes, and subsequently an anode current density of 0.350-0.357 A/dm² and a cathode current density of 0.5-0.51 A/dm² are generated for 1 second, this cycle being repeated during the process.

4. The method according to Claim 1, **characterised by** that the emulsion is pre-heated to 10-70°C, preferably to 25-50°C.

5. The method according to Claim 1, **characterised by** that the pH of the emulsion is adjusted such that the pH value of the decontaminated water is between 6-8, preferably 7 ± 0.25.

6. Colloid decomposition method for electrochemically resolving emulsions, primarily W/O type emulsions, comprising the steps of
- separating solid contaminants from the emulsion,
- absorbing CO₂ gas in the emulsion, thereby changing the emulsion type from W/O to O/W,
- pre-heating the emulsion utilizing a heat regenerator,
- setting the stability minimum of the emulsion by adjusting the pH,
- resolving the emulsion in an electrochemical decomposition reactor by passing it between an anode made of electrochemically active material and a cathode made of electrochemically inactive material, while the colloid particles of the emulsion are bound in flocks forming a foam utilizing as a flocculants the compound produced in situ from the electrochemically active anode.
- discharging the foam produced in the above step, and
- discharging the decontaminated water through a final settlement tank and/or a final filter and/or a heat regenerator.

7. The method according to Claim 6, **characterised by** that continuously introduced CO₂ gas is absorbed in the emulsion.

8. The method according to Claim 6, **characterised by** that discontinuously introduced CO₂ gas is absorbed in the emulsion.

9. The method according to Claim 7 or 8, **characterised by** that 2-20 g/dm³ of CO₂ gas is absorbed in the emulsion

10. The method according to any one of Claims 6-9, **characterised by** that the conductivity of the emulsion is increased if necessary by adding a conducting salt.

11. Colloid decomposition apparatus for electrochemically resolving emulsions, comprising
- an emulsion container (1) connected through a pre-settlement tank (3) and a feed pump (5) to a hydrocyclone (12) and/or an initial filter (9),
- for electrochemically resolving W/O type emulsions, a CO₂ gas tank (27) for introducing CO₂ gas into the emulsion through a discontinuous CO₂ feeder (19,20) and/or a continuous CO₂ feeder (28),
- an electrochemical decomposition reactor (38) to which the hydrocyclone (12) and/or the initial filter (9) are connected through a heat regenerator (32) and feed pump (34), where an anode made of electrochemically active material and connected to a power supply (41), and a cathode made of electrochemically inactive material are arranged in the electrochemical decomposition reactor (38), with the emulsion being introduced between the anode and the cathode such that the emulsion introduction point is disposed lower than the emulsion discharge point,
- a receiving tank (39) connected to the electrochemical decomposition reactor (38), adapted for receiving the foam produced in the process and for receiving the settled and/or filtered particles,
- a discharge pump (37) for discharging through a final filter (44) and/or a final settlement tank (47) and a heat regenerator (32) the decontaminated water leaving the electrochemical decomposition reactor (38),
- a pH adjustment unit consisting of a pH meter (40) disposed downstream of the electrochemical decomposition reactor (38) for measuring the pH of decontaminated water, a controller (42) connected to the pH meter (40), a reagent container (43), and a reagent feeder (36) that is disposed upstream of the electrochemical decomposition reactor (38).
- stop valves (2, 4, 6, 7, 8, 10, 11, 13, 14, 15, 16, 17, 18, 21, 22, 23, 24, 25, 26, 29, 30, 33, 45, 46, 48, 49) known per se, disposed in the pipes that carry the emulsion or the decontaminated water, the stop valves being adapted for preventing or allowing the flow of the emulsion or the decontaminated water.

12. The apparatus according to Claim 11, **characterised by** that it has two discontinuous CO₂ feeders (19, 20), where CO₂ gas is introduced into one of the CO₂ feeders and at the same time the emulsion is introduced into the other CO₂ feeder.

13. The apparatus according to Claim 11, **characterised by** that the electrochemically active anode is made of iron and/or aluminium, and the electrochemically inactive cathode is made of stainless steel or graphite.

14. The apparatus according to Claim 11, **characterised by** that the heat regenerator (32) is implemented as a recuperative heat exchanger.

15. The apparatus according to Claim 14, **characterised by** that an auxiliary heat regenerator (31) is disposed upstream of the heat regenerator (32).

16. The apparatus according to Claim 15, **characterised by** that the auxiliary heat regenerator (31) is a recuperative heat exchanger, where the decontaminated water is passed through one circuit of the heat exchanger, and a medium pre-heated utilizing a pre-heater (50) is passed through another circuit of the same heat exchanger.

## Patentansprüche

1. Kolloidzersetzungsverfahren zum elektrochemischen Auflösen von Emulsionen, vor allem Emulsionen vom O/W-Typ, umfassend die Schritte:
- Abtrennen von fester Verunreinigungen aus der Emulsion,
- Vorwärmen der Emulsion unter Verwendung eines Wärmegenerators,
- Einstellen des Stabilitätsminimums der Emulsion durch Einstellen des pH-Wertes,
- Auflösen der Emulsion in einem elektrochemischen Zersetzungsreaktor dadurch, dass die Emulsion zwischen einer Anode aus elektrochemisch aktivem Material und einer Kathode aus elektrochemisch inaktivem Material durchgeführt wird, und während der Durchführung die Kolloidteilchen der Emulsion durch Verwenden der aus der Anode aus elektrochemisch aktivem Material in situ hergestellter Verbindung als Flockungsmittel in Form von Schaum bildenden Flocken gebunden werden,
- Abführen des im vorigen Schritt hergestellten Schaumes, und
- Abführen des dekontaminierten Wassers durch ein Endfilter und/oder einen Endabsetzbehälter und einen Wärmeregenerator.

2. Verfahren nach Anspruch 1, **dadurch gekennzeichnet, dass** als Anode metallisches Aluminium verwendet wird, wobei der zwischen den Elektroden fließende elektrische Strom so eingestellt wird, dass die Eingabegeschwindigkeit des Aluminiums in die Lösung zwischen 1-1000 mg/1 AI³⁺, vorzugsweise zwischen 1-100 mg/l Al³⁺ ist.

3. Verfahren nach Anspruch 2, **dadurch gekennzeichnet, dass** eine Anodenstromdichte von 0,05-0,3 A/dm² und eine Kathodenstromdichte von 0,1-0,9 A/dm² für 2 bis 2,5 Minuten aufrechterhalten werden, und anschließend eine Anodenstromdichte von 0,350-0,357 A/dm² und eine Kathodenstromdichte von 0,5-0,51 A/dm² für 1 Sekunde erzeugt werden, und dieser Zyklus während des Prozesses wiederholt wird.

4. Verfahren nach Anspruch 1, **dadurch gekennzeichnet, dass** die Emulsion auf 10-70 °C, vorzugsweise auf 25-50 °C vorgewärmt wird.

5. Verfahren nach Anspruch 1, **dadurch gekennzeichnet, dass** der pH-Wert der Emulsion so eingestellt wird, dass der pH-Wert des dekontaminierten Wassers zwischen 6-8, vorzugsweise 7 ± 0,25 ist.

6. Kolloidzersetzungsverfahren zum elektrochemischen Auflösen von Emulsionen, vor allem Emulsionen vom W/O-Typ, umfassend die Schritte:
- Abtrennen von fester Verunreinigungen aus der Emulsion,
- Absorbieren von CO₂-Gas in der Emulsion, und dadurch Ändern des Emulsionstyps von W/O auf O/W.
- Vorwärmen der Emulsion unter Verwendung eines Wärmegenerators,
- Einstellen des Stabilitätsminimums der Emulsion durch Einstellen des pH-Wertes,
- Auflösen der Emulsion in einem elektrochemischen Zersetzungsreaktor, dadurch, dass die Emulsion zwischen einer Anode aus elektrochemisch aktivem Material und einer Kathode aus elektrochemisch inaktivem Material durchgeführt wird, und während der Durchführung die Kolloidteilchen der Emulsion durch Verwenden der aus der Anode aus elektrochemisch aktivem Material in situ hergestellter Verbindung als Flockungsmittel in Form von Schaum bildenden Flocken gebunden werden,
- Abführen des im vorigen Schritt hergestellten Schaumes, und
- Abführen des dekontaminierten Wassers durch ein Endfilter und/oder einen Endabsetzbehälter und einen Wärmeregenerator.

7. Verfahren nach Anspruch 6, **dadurch gekennzeichnet, dass** kontinuierlich eingespeistes CO₂-Gas in der Emulsion absorbiert wird.

8. Verfahren nach Anspruch 6, **dadurch gekennzeichnet, dass** diskontinuierlich eingespeistes CO₂-Gas in der Emulsion absorbiert wird.

9. Verfahren nach Anspruch 7 oder 8, **dadurch gekennzeichnet, dass** CO₂-Gas in einer Menge von 2-20 g/dm³ in der Emulsion absorbiert wird.

10. Verfahren nach einem der Ansprüche 6 bis 9, **dadurch gekennzeichnet, dass**, wenn es notwendig ist, die Leitfähigkeit der Emulsion durch Hinzugeben eines Leitsalzes erhöht wird.

11. Kolloidzersetzungsanlage zum elektrochemischen Auflösen von Emulsionen, umfassend:
- einen Emulsionsbehälter (1), der über einen Vorabsetzbehälter (3) und eine Speisepumpe (5) mit einem Hydrozyklon (12) und/oder einem Vorfilter (9) verbunden ist,
- zum elektrochemischen Auflösen von Emulsionen vom W/O-Typ einen CO₂-Gasbehälter (27) zum Einspeisen von CO₂-Gas in die Emulsion durch eine diskontinuierliche CO₂-Speiseeinrichtung (19, 20) und/oder eine kontinuierliche CO₂-Speiseeinrichtung (28),
- einen elektrochemischen Zersetzungsreaktor (38), an den der Hydrozyklon (12) und/oder das Vorfilter (9) über einen Wärmegenerator (32) und eine Speisepumpe (34) angeschlossen ist, wobei in dem elektrochemischer Zersetzungsreaktor (38) eine aus elektrochemisch aktivem Material hergestellte und mit einem Netzgerät (41) verbundene Anode und eine aus elektrochemisch inaktivem Material hergestellte Kathode angeordnet sind, und wobei die Emulsion zwischen der Anode und der Kathode so eingespeist ist, dass der Emulsionseinspeisepunkt niedriger angeordnet ist, als der Emulsionsabführpunkt,
- einen Aufnahmebehälter (39), der mit dem elektrochemischen Zersetzungsreaktor (38) verbunden ist, und zum Aufnehmen des im Prozess hergestellten Schaumes und der abgesetzten und/oder ausgefilterten Teilchen ausgestaltet ist,
- eine Förderpumpe (37) zum Abführen des aus dem elektrochemischen Zersetzungsreaktor (38) austretenden dekontaminierten Wassers durch ein Endfilter (44) und/oder einen Endabsetzbehälter (47) und einen Wärmeregenerator (32),
- eine pH-Einstelleinheit, bestehend aus einem stromabwärts dem elektrochemischen Zersetzungsreaktor (38) angeordneten pH-Meter (40) zum Messen des pH-Wertes des dekontaminierten Wassers, einem mit dem pH-Meter verbundenen Regler (42), einem Reagenzbehälter (43) und einer Reagenzspeiseeinrichtung (36), die stromaufwärts dem elektrochemischen Zersetzungsreaktor (38) angeordnet ist,
- in sich bekannte Absperrventile (2, 4, 6, 7, 8, 10, 11, 13, 14, 15, 16, 17, 18, 21, 22, 23, 24, 25, 26, 29, 30, 33, 45, 46, 48, 49), die in den Leitungen angeordnet sind, die die Emulsion oder das dekontaminierte Wasser führen, wobei die Absperrventile zum Verhindem, bzw. Ermöglichen der Strömung der Emulsion oder des dekontaminierten Wassers ausgestaltet sind.

12. Anlage nach Anspruch 11, **dadurch gekennzeichnet, dass** die Anlagezwei diskontinuierliche CO₂-Speiseeinrichtungen (19, 20) aufweist, wobei CO₂-Gas in eine der CO₂-Speiseeinrichtungeneingespeist ist und gleichzeitig die Emulsion in die andere CO₂-Speiseeinrichtung eingespeist ist.

13. Anlage nach Anspruch 11, **dadurch gekennzeichnet, dass** die elektrochemisch aktive Anode aus Eisen und/oder Aluminium hergestellt ist, und die elektrochemisch inaktive Kathode aus rostfreiem Stahl oder Graphit hergestellt ist.

14. Anlage nach Anspruch 11, **dadurch gekennzeichnet, dass** der Wärmeregenerator (32) als ein rekuperativer Wärmetauscher ausgestaltet ist.

15. Anlage nach Anspruch 14, **dadurch gekennzeichnet, dass** ein Zusatzwärmeregenerator (31) stromaufwärts dem Wärmeregenerator (32) angeordnet ist.

16. Anlage nach Anspruch 15, **dadurch gekennzeichnet, dass** der Zusatzwärmeregenerator (31) ein rekuperativer Wärmetauscher ist, wobei durch einen Kreis des Wärmetauschers das dekontaminierte Wasser durchgeführt ist, und durch einen anderen Kreis des gleichen Wärmetauschers ein durch Verwenden eines Vorwärmers (50) vorgewärmtes Medium durchgeführt ist.

## Revendications

1. Procédé de décomposition d'un colloïde pour séparer électrochimiquement des émulsions, principalement des émulsions de type O/W (huile/eau), comprenant les étapes consistant à :
- séparer des contaminants solides de l'émulsion,
- préchauffer l'émulsion en utilisant un régénérateur de chaleur,
- fixer la stabilité minimale de l'émulsion en ajustant le pH,
- séparer l'émulsion dans un réacteur de décomposition électrochimique en la faisant passer entre une anode constituée d'un matériau électrochimiquement actif et une cathode constituée d'un matériau électrochimiquement inactif, alors que les particules colloïdales de l'émulsion sont liées sous forme de flocons formant une mousse en utilisant en tant que floculants le composé produit in situ à partir de l'anode électrochimiquement active,
- évacuer la mousse produite à l'étape ci-dessus, et
- évacuer l'eau décontaminée à travers un filtre final et/ou un réservoir de décantation finale et un régénérateur de chaleur.

2. Procédé selon la revendication 1, **caractérisé en ce qu'**un métal d'aluminium est utilisé en tant qu'anode, en ajustant le courant électrique circulant entre les électrodes de telle sorte que la vitesse d'introduction d'aluminium dans la solution est compris entre 1 et 1000 mg/l de Al³⁺, de préférence entre 1 et 100 mg/l de Al³⁺.

3. Procédé selon la revendication 2, **caractérisé en ce qu'**une densité de courant d'anode de 0,05 à 0,3 A/dm² et une densité de courant d'anode de 0,1 à 0,9 A/dm² sont maintenues pendant 2 à 2,5 minutes, et par la suite une densité de courant d'anode de 0,350 à 0357 A/dm² et une densité de courant de cathode de 0,5 à 0,51 A/dm² sont produites pendant 1 seconde, ce cycle étant répété pendant le traitement.

4. Procédé selon la revendication 1, **caractérisé en ce que** l'émulsion est préchauffée entre 10 et 70°C, de préférence entre 25 et 50°C.

5. Procédé selon la revendication 1, **caractérisé en ce que** le pII de l'émulsion est ajusté de telle sorte que la valeur du pH de l'eau décontaminée est situé entre 6 et 8, de préférence de 7±0,25.

6. Procédé de décomposition d'un colloïde pour séparer électrochimiquement des émulsions, principalement des émulsions de type W/O, comprenant les étapes consistant à :
- séparer des contaminants solides de l'émulsion,
- absorber du CO₂ gazeux dans l'émulsion, en changeant ainsi le type d'émulsion de W/O en O/W (huile/eau),
- préchauffer l'émulsion en utilisant un régénérateur de chaleur,
- fixer la stabilité minimale de l'émulsion en ajustant le pH,
- séparer l'émulsion dans un réacteur de décomposition électrochimique en la faisant passer entre une anode constituée d'un matériau électrochimiquement actif et une cathode constituée d'un matériau électrochimiquement inactif, alors que les particules colloïdales de l'émulsion sont liées sous forme de flocons formant une mousse en utilisant en tant que floculants le composé produit in situ à partir de l'anode électrochimiquement active,
- évacuer la mousse produite dans l'étape ci-dessus, et
- évacuer l'eau décontaminée à travers un réservoir de décantation finale et/ou un filtre final et/ou un régénérateur de chaleur.

7. Procédé selon la revendication 6, **caractérisé en ce que** du CO₂ gazeux introduit en continu est absorbé dans l'émulsion.

8. Procédé selon la revendication 6, **caractérisé en ce que** du CO2 gazeux introduit de manière discontinue est absorbé dans l'émission.

9. Procédé selon les revendications 7 ou 8, **caractérisé en ce que** de 2 à 20 g/dm³ de CO2 gazeux sont absorbés dans l'émission.

10. Procédé selon l'une quelconque des revendications 6 à 9, **caractérisé en ce que** la conductivité de l'émulsion est augmentée si nécessaire en ajoutant un sel conducteur.

11. Appareil de décomposition de colloïde pour séparer électrochimiquement des émulsions, comprenant :
- un conteneur d'émulsion (1) relié à travers un réservoir de pré-décantation (3) et une pompe d'alimentation (5) à un hydrocyclone (12) et/ou un filtre initial (9),
- pour séparer électrochimiquement des émulsions de type W/O, un réservoir de CO₂ gazeux (27) pour introduire du CO₂ gazeux dans l'émulsion à travers un dispositif d'alimentation de CO₂ de manière discontinue (19, 20) et/ou un dispositif d'alimentation de CO₂ en continu (28),
- un réacteur de décomposition électrochimique (38) auquel l'hydrocyclone (12) et/ou le filtre initial (9) sont reliés par l'intermédiaire d'un régénérateur de chaleur (32) et d'une pompe d'alimentation (34), où une anode constituée d'un matériau électrochimiquement actif est reliée à une alimentation de courant (41), et une cathode constituée d'un matériau électrochimiquement inactif sont prévues dans le réacteur de décomposition électrochimique (38), l'émulsion étant introduite entre l'anode et la cathode de sorte que le point d'introduction de l'émulsion est disposé plus bas que le point d'évacuation de l'émulsion,
- un réservoir de réception (39) relié au réacteur de décomposition électrochimique (38), adapté pour recevoir la mousse produite dans le traitement et pour recevoir les particules décantées et/ou filtrées,
- une pompe d'évacuation (37) pour évacuer à travers un filtre final (44) et/ou un réservoir de décantation finale (47) et un régénérateur de chaleur (32) l'eau décontaminée quittant le réacteur de décomposition électrochimique (38),
- une unité d'ajustement de pH constituée d'un pH-mètre (40) disposé en aval du réacteur de décomposition électrochimique (38) pour mesurer le pH de l'eau décontaminée, une commande (42) reliée au pH-mètre (40), un conteneur de réactif (43), et un dispositif d'alimentation de réactif (36) qui est disposé en amont du réacteur de décomposition électrochimique (38),
- des vannes d'arrêt (2, 4, 6, 7, 8, 10, 11, 13, 14, 15, 16, 17, 18, 21, 22, 23, 24, 25, 26, 29, 30, 33, 45, 46, 48, 49) connues en soi, disposées dans les tuyaux qui transportent l'émulsion ou l'eau décontaminée, les vannes d'arrêt étant adaptées pour empêcher ou permettre l'écoulement de l'émulsion ou de l'eau décontaminée.

12. Appareil selon la revendication 11, **caractérisé en ce qu'**il comporte deux dispositifs d'alimentation de CO₂ en discontinu (19, 20), où du CO₂ gazeux est introduit dans l'un des dispositifs d'alimentation de CO₂ et où en même temps l'émulsion est introduite dans l'autre dispositif d'alimentation de CO₂.

13. Appareil selon la revendication 11, **caractérisé en ce que** l'anode électrochimiquement active est constituée de fer et/ou d'aluminium, et la cathode électrochimiquement inactive est constituée d'acier inoxydable ou de graphite.

14. Appareil selon la revendication 11, **caractérisé en ce que** le générateur de chaleur (32) est mis en oeuvre sous la forme d'un échangeur de chaleur de récupération.

15. Appareil selon la revendication 14, **caractérisé en ce qu'**un régénérateur de chaleur auxiliaire (31) est disposé en amont du régénérateur de chaleur (32).

16. Appareil selon la revendication 15, **caractérisé en ce que** le régénérateur de chaleur auxiliaire (31) est un échangeur de chaleur de récupération, où l'eau décontaminée passe à travers un circuit de l'échangeur de chaleur, et où un milieu préchauffé en utilisant un préchauffage (50) passe à travers un autre circuit du même échangeur de chaleur.
